# EUROPEAN PATENT APPLICATION

(11) **EP 2 511 848 A2**
(43) Date of publication of application: **17.10.2012**
(21) Application number: 12163306.9
(22) Date of filing: 05.04.2012
(51) Int. Cl.: G06F 21/24

(54) **Multiple independent encryption domains**

(30) Priority: 10.04.2011 US 201161473808 P
(71) Applicant: QNX Software Systems Limited, Kanata, Ontario K2K 0B3 (CA)
(72) Inventor: Van der Veen, Peter H., Ottawa, Ontario K2L 1G5 (CA)
(74) Representative: Patel, Binesh

(57) **Abstract**

A stored object may be encrypted with an "object" cryptographic key. The object cryptographic key may be stored in metadata for the object and the metadata for the object may be encrypted using an "internal" cryptographic key associated with a particular encryption domain. The internal cryptographic key may be stored in a filesystem memory block associated with the particular encryption domain. A "domain" cryptographic key may be generated and stored associated with the particular encryption domain. The domain cryptographic key may be used to encrypt the filesystem memory block. Conveniently, below the domain cryptographic key, the filesystem has a unique, totally unknown, internal cryptographic key for actual data encryption.

## Description

The present application relates generally to encryption of data stored in memory and, more specifically, to configuring memory to have multiple independent encryption domains.

Typically, to provide security for data stored in a device, data in a memory device is maintained by an operating system with a built-in encryption framework. Responsive to interactions between a user and a user interface aspect of the framework, a processor executing the operating system may encrypt individual files or entire directories of files.

### GENERAL

The present application proposes adding a level of indirection to a memory capable of storing encrypted objects. Conveniently, the additional level of indirection allows the establishment of multiple, independent encryption domains. Each of the encryption domains can be associated with any number of objects (e.g., files), even if those objects are not located in the same logical area (e.g., in the same directory).

According to an aspect of the present disclosure, there is provided a method of encrypting an object. The method includes generating a first cryptographic key, allocating a filesystem memory block to an encryption domain, storing said first cryptographic key in said filesystem memory block, receiving a second cryptographic key, encrypting said filesystem memory block using said second cryptographic key, generating a third cryptographic key, encrypting said object with said third cryptographic key, storing said third cryptographic key in metadata for said object and encrypting, using said first cryptographic key, said metadata for said object. In other aspects of the present application, a processor is provided for carrying out this method and a computer readable medium is provided for adapting a processor in a computing apparatus to carry out this method.

According to another aspect of the present disclosure, there is provided a method of managing multiple encryption domains for storing objects. The method includes encrypting, with a first cryptographic key, a first filesystem memory block storing a second cryptographic key, which second cryptographic key has been used to encrypt first metadata for a first object associated with a first encryption domain, the first object encrypted with a third cryptographic key stored in the first metadata and encrypting, with a fourth cryptographic key, a second filesystem memory block storing a fifth cryptographic key, which fifth cryptographic key has been used to encrypt second metadata for a second object associated with a second encryption domain, the second object encrypted with a sixth cryptographic key stored in the second metadata. In other aspects of the present application, a processor is provided for carrying out this method and a computer readable medium is provided for adapting a processor in a computing apparatus to carry out this method.

### BRIEF DESCRIPTION OF THE DRAWINGS

Reference will now be made, by way of example, to the accompanying drawings which show example implementations; and in which:

FIG. 1 illustrates a schematic layout of an example data storage device with data stored according to aspects of the present disclosure; and

FIG. 2 illustrates example steps in a method of encrypting an object according to aspects of the present disclosure.

### DESCRIPTION OF PREFERRED EMBODIMENTS

In overview, the present disclosure proposes implementing a memory storing filesystems with multiple levels of security implemented as multiple independent encryption "domains".

In general, a filesystem may be considered to be a method of storing and organizing computer files and their data. A filesystem may be considered to relate to the manner in which the files are organized into a database for the storage, organization, manipulation and retrieval by an operating system.

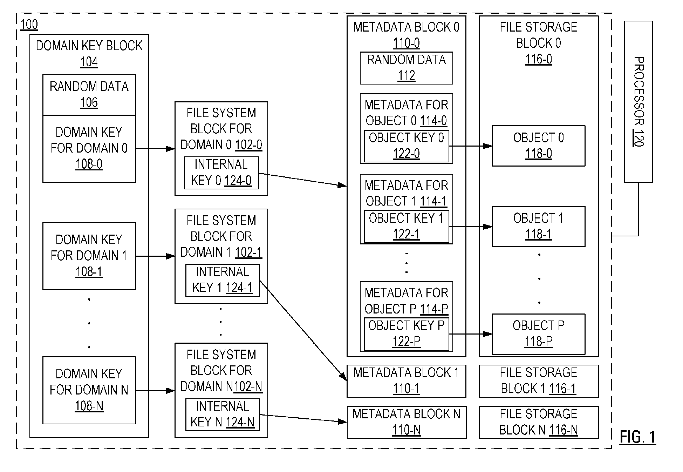

FIG. 1 illustrates a schematic layout of an example data storage device 100 with data stored according to aspects of the present disclosure. The example data storage device 100 includes objects 118-0, 118-1,..., 118-P (individually or collectively 118) stored in a file storage memory block 0 116-0 (hereinafter "file storage block 116-0"). The objects 118, as will be familiar to those of skill in the art, may be, for example, files, directories or special files.

The example data storage device 100 also includes objects (not shown) stored in further file storage blocks 116. While a file storage block 1 116-1 and a file storage block N 116-N are illustrated, it should be understood that the number of file storage blocks can be dependent upon the field of use and the current application is not intended to be limited to a specific number of file storage blocks.

The example data storage device 100 is illustrated as being in communication with a processor 120. A person of ordinary skill in the art can appreciate the proliferation of computing apparatus that include a processor and a secure memory, including desktop computers, notebook computers, tablet computers, smartphones, handheld communication devices, palmtop computers, etc. In addition to memory blocks illustrated in FIG. 1, the example data storage device 100 may also store instructions that, when executed by the processor 120, cause the processor 120 to carry out method aspects of the present disclosure.

According to aspects of the present disclosure, each object 118 stored on the example data storage device 100 may include an attribute to indicate that the object 118 is part of a particular encryption domain. For the purposes of organization within the example data storage device 100, each encryption domain may, for example, be identified by a number.

The example data storage device 100 also includes a metadata memory block associated with each encryption domain. The illustrated metadata memory block 110-0 (hereinafter "metadata block 110-0") is associated with encryption domain "0". Stored in the metadata block 110-0 are metadata 114-0, 114-1,..., 114-P (individually or collectively 114) for respective ones of the objects 118-0, 118-1,..., 118-P associated with encryption domain "0". It should be clear that reference character "P" is used to indicate an unknown number of objects 118 and should not be interpreted, given that "P" is the sixteenth letter of the alphabet, to limit the number of objects to 16. Each object 118 in the file storage block 0 116-0 may be encrypted using a random "object" cryptographic key. The metadata 114 for a particular object 118 includes the object cryptographic key used to encrypt the object 118. The object cryptographic key may, for example, be 512 bits long. An object cryptographic key "0" 122-0, used to encrypt an object 118-0, is illustrated as being stored in the metadata 114-0. Similarly, an object cryptographic key "1" 122-1, used to encrypt an object 118-1, is illustrated as being stored in the metadata 114-1 and an object cryptographic key "P" 122-P, used to encrypt an object 118-P, is illustrated as being stored in the metadata 114-P.

The metadata block 110-0 for encryption domain "0" is encrypted using an "internal" cryptographic key 124-0 associated with the encryption domain "0". The internal cryptographic key may, for example, be 512 bits long.

The example data storage device 100 also includes a filesystem memory block 102-0, 102-1,..., 102-N (hereinafter "filesystem block", individually or collectively 102), with a filesystem block 102 allocated for each encryption domain and each encryption domain including a metadata block 110 and a file storage block 116. Each filesystem block 102 stores the internal cryptographic key associated with the encryption domain to which the filesystem block 102 has been allocated. Accordingly, internal cryptographic key 124-0 is illustrated as stored in filesystem memory block 102-0. Similarly, an internal cryptographic key 124-1 is illustrated as stored in filesystem memory block 102-1 and internal cryptographic key 124-N is illustrated as stored in filesystem memory block 102-N. Furthermore, there may be no provision made for exposure of the internal cryptographic key 124.

Each filesystem block 102 may be encrypted using a domain cryptographic key. Indeed, each encryption domain may be associated with a domain cryptographic key. Encryption of each filesystem block 102 may, for example, involve use of the known Advanced Encryption Standard (AES). More particularly, the variety of AES known as "AES256" may be used with a domain cryptographic key that is 256 bits long.

The example data storage device 100 also includes a domain key memory block 104 (hereinafter "domain key block 104"). Stored in the domain key block 104 are domain cryptographic keys 108-0, 108-1,..., 108-N (individually or collectively 108) associated with respective ones of the encryption domains.

The metadata block 110-0 may include, for example, 512 bits of metadata random data 112 at the beginning of the metadata block 110-0. It should be clear that the metadata random data 112 is optional and that the number of bits of metadata random data 112 should not be considered to be limited to a particular minimum. Indeed, more bits of metadata random data 112 are better than fewer. Based upon an implementation of AES working on 16-byte blocks chaining to the next 16-byte block, 16-bytes of metadata random data 112 may be used. Conveniently, the metadata random data 112 contributes to an assurance that the object cryptographic keys 122, which are stored in the metadata block 110-0, may not be easily reverse engineered. Every time the metadata block 110-0 is updated, the metadata random data 112 may be re-generated. Notably, the metadata random data 112 is encrypted when the metadata block 110-0 is encrypted.

The domain key block 104 may include, for example, 512 bits of domain key random data 106 at the beginning of the domain key block 104. It should be clear that the domain key random data 106 is optional and that the number of bits of domain key random data 106 should not be considered to be limited a particular minimum. Indeed, more bits of domain key random data 106 are better than fewer. Based upon an implementation of AES working on 16-byte blocks chaining to the next 16-byte block, 16-bytes of domain key random data 106 may be used. Conveniently, the domain key random data 106 contributes to an assurance that the domain cryptographic keys 108, which are stored in the domain key block 104, may not be easily reverse engineered. Every time the domain key block 104 is updated, the domain key random data 106 may be re-generated.

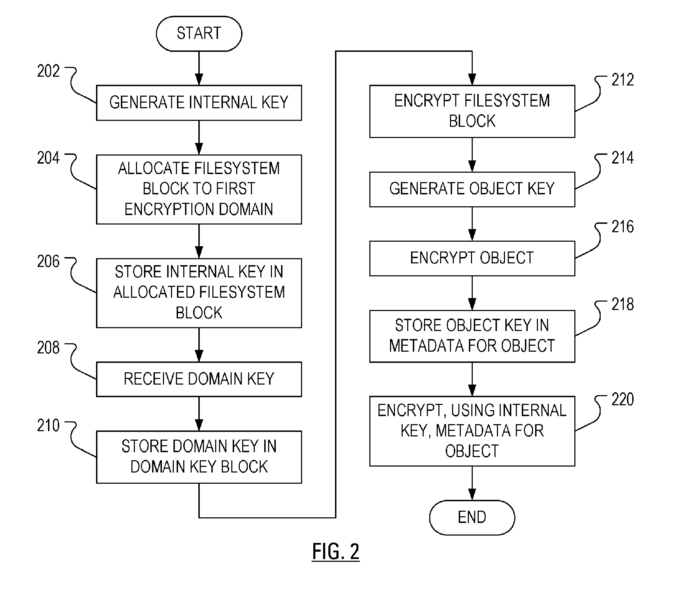

In operation, in consideration of the example data storage device 100 with no objects 118 stored and no encryption domains configured, FIG. 2 illustrates example steps in a method of encrypting an object 118. Upon storing an object 118 in the file storage block 116, the processor 120 generates (step 202) an internal cryptographic key 124 for association with a first encryption domain. The processor 120 then allocates (step 204) a filesystem block 102 to the first encryption domain and stores (step 206) the internal cryptographic key 124 in the filesystem block 102. The processor 120 then receives (step 208) a domain cryptographic key 108 and stores (step 210) the domain cryptographic key 108 in the domain key block 104. The processor 120 may receive (step 208) the domain cryptographic key 108. Alternatively, the domain cryptographic key 108 may be provided to the processor 120. The processor 120 then encrypts (step 212) the filesystem block 102 using the domain cryptographic key 108. The processor 120 then generates (step 214) an object cryptographic key 122 and encrypts (step 216) the object 118 using the object cryptographic key 122. The processor 120 then stores (step 218) the object cryptographic key 122 in metadata 114 for the object 118 and encrypts (step 220) the metadata block 110 using the internal cryptographic key 124. Notably, the metadata random data 112 is encrypted, along with the metadata 114, when the metadata block 110 is encrypted in step 220.

Even in an unlocked state, an example object 118 in a given encryption domain may be stored in the example data storage device 100 in an encrypted state. The object cryptographic key 122 used to encrypt (step 216) the example object 118 is stored (step 218) in corresponding metadata 114 in the metadata block 110. As described hereinbefore, the metadata block 110 is encrypted (step 220) by the internal cryptographic key 124.

A programmer interfacing to a given encryption domain may lock the given encryption domain by providing a domain cryptographic key 108. In an example case, providing the domain cryptographic key 108 may involve directing the processor 120 to retrieve the domain cryptographic key 108 from an enterprise server. The domain cryptographic key 108 may, for example, be a digest of a password. Based on the programmer providing the domain cryptographic key 108 to the processor 120, the processor 120 encrypts (step 212) the filesystem block 102 for the given encryption domain. Accordingly, all the objects 118 associated with the given encryption domain may be considered to be in a locked state.

To gain access to a particular object 118 in a given locked encryption domain, a programmer first unlocks the given encryption domain. Unlocking the given encryption domain begins with provision, by, for example, the programmer, of the domain cryptographic key 108 associated with the given encryption domain. Based on the provision of the domain cryptographic key 108, the processor 120 may use the domain cryptographic key 108 to decrypt the filesystem block 102 for the given encryption domain. Subsequent to the decryption of the filesystem block 102, the processor 120 may use the internal cryptographic key 124 stored in the filesystem block 102 to decrypt the metadata block 110-0 that contains the metadata 114 associated with the particular object 118. Subsequent to the decryption of the metadata block 110-0, the processor 120 may decrypt the particular object 118 using the object cryptographic key 122 stored in the metadata 114 associated with the particular object 118. Upon decrypting the particular object, the programmer thus gains access to the particular object 118.

Each object 118 typically remains encrypted with the object cryptographic key 122 stored in the metadata 114 for the object 118. Accordingly, the objects 118 associated with a given encryption domain can only be accessed when the domain cryptographic key 108 associated with the given encryption domain has been provided. Notably, after the given encryption domain has been unlocked, the domain cryptographic key 108 associated with the given encryption domain is no longer needed. Accordingly, the domain cryptographic key 108 associated with the given encryption domain may be removed from the domain key block 104.

Aspects of the present disclosure allow for changing the domain cryptographic key 108. To accomplish such a change, the processor 120 may use a current domain cryptographic key 108 associated with a given encryption domain to decrypt the filesystem block 102 associated with the given encryption domain. The processor 120 may then generate a new domain cryptographic key 108. Finally, the processor may encrypt the filesystem block 102 with the new domain cryptographic key 108.

Conveniently, changing the domain cryptographic key 108 for a given domain, for example, to change the password for the domain or to change permissions for the domain, does not require decryption of the metadata block 110 or the file storage block 116 for the domain, and subsequent re-encryption. Indeed, the encryption of the metadata block 110 or the file storage block 116 for a given domain stays the same as when first created. This is beneficial, since combination of the metadata block 110 and the file storage block 116 for a given domain can be very large.

Notably, when a new object 118 is created, the new object 118 can inherit an encryption domain, without the encryption domain for the new object 118 needing to be explicitly set. For example, the new object 118 may be a file created in an existing object that is an existing directory, where the existing directory is already associated with an encryption domain. Accordingly, existing applications may be executed and create files with specific encryption properties without having to be altered to work with the filesystems proposed herein.

Aspects of the present disclosure may be found useful for multiple users sharing the same device. Because the encryption domain configuration is separate from the filesystem layout, the user's encrypted information can be anywhere in the filesystem. Existing programs would not have to be modified to take advantage of the encryption. For example, directories (objects) /var/spool/mail/user1 and /home/user1 could be associated with the same encryption domain. In existing practice, a volume would be encrypted and an operating system would be redirected to the encrypted volume. The inventor has recognized a problem in existing practice related to the manner in which one decides is how big to make the encrypted volume. Such a problem is not encountered when using aspects of the present disclosure.

Aspects of the present disclosure may also be found useful by a corporation wanting to put protected information onto an employee's device, such that the protected information is only available when the employee is secured to the corporation infrastructure. Securing to the corporation infrastructure may be accomplished through an enterprise server service, through connecting to a corporate virtual private network or through using a corporate wireless network within a corporate building.

Conveniently, below the domain cryptographic key 108, every filesystem 102 stores a unique, totally unknown, internal cryptographic key 124 for actual data encryption.

Other aspects and features of the present disclosure will become apparent to those of ordinary skill in the art upon review of the following description of specific implementations of the disclosure in conjunction with the accompanying figures.

The above-described implementations of the present application are intended to be examples only. Alterations, modifications and variations may be effected to the particular implementations by those skilled in the art without departing from the scope of the application, which is defined by the claims appended hereto.

## Claims

1. A method of encrypting an object, said method comprising:
generating (202) a first cryptographic key;
allocating (204) a filesystem memory block to an encryption domain;
storing (206) said first cryptographic key in said filesystem memory block;
receiving (208) a second cryptographic key;
encrypting (212) said filesystem memory block using said second cryptographic key;
generating (214) a third cryptographic key;
encrypting (216) said object with said third cryptographic key;
storing (218) said third cryptographic key in metadata for said object; and
encrypting (220), using said first cryptographic key, said metadata for said object.

2. The method of claim 1 wherein said object comprises a file or a directory.

3. The method of claim 1 or claim 2 wherein said encrypting said filesystem memory block using said second cryptographic key comprises using the Advanced Encryption Standard.

4. The method of any one of claims 1-3 wherein said storing said third cryptographic key in metadata for said object comprises storing said metadata for said object in a metadata memory block and said encrypting said metadata for said object comprises encrypting, using said first cryptographic key, said metadata memory block.

5. The method of claim 4 further comprising, before said encrypting said metadata memory block:
generating random data;
inserting said random data in said metadata memory block.

6. The method of claim 5 wherein said inserting comprises inserting said random data in a beginning of said metadata block.

7. The method of claim 5 or claim 6, wherein said random data is initial random data, said method further comprising:
updating said metadata for said object;
generating further random data; and
inserting said further random data in said metadata memory block in place of said initial random data.

8. The method of claim 7 further comprising, responsive to said inserting said further random data, thereby creating an updated metadata memory block, encrypting, using said first cryptographic key, said updated metadata memory block.

9. The method of any one of claims 1-8 further comprising storing said second cryptographic key in a second key memory block.

10. The method of claim 9 further comprising:
generating random data;
inserting said random data in said second key memory block.

11. The method of claim 10 wherein said random data comprises at least 512 bits.

12. The method of claim 10 or claim 11 wherein said inserting comprises inserting said random data in a beginning of said second key block.

13. A computing apparatus comprising a memory (100) including a filesystem memory block (116) and a processor (120) adapted to carry out the method of any of claims 1 to 12.

14. A computer readable medium containing computer-executable instructions that, when performed by processor (100) in a computing apparatus, cause said processor (100) to carry out the method of any of claims 1 to 12.

15. A method of managing multiple encryption domains for storing objects, said method comprising:
encrypting, with a first cryptographic key, a first filesystem memory block storing a second cryptographic key, which second cryptographic key has been used to encrypt a first metadata memory block storing metadata for a first object associated with a first encryption domain, said first object encrypted with a third cryptographic key stored among said metadata for said first object; and
encrypting, with a fourth cryptographic key, a second filesystem memory block storing a fifth cryptographic key, which fifth cryptographic key has been used to encrypt a second metadata memory block storing metadata for a second object associated with a second encryption domain, said second object encrypted with a sixth cryptographic key stored among said metadata for said second object.

16. The method of claim 15 wherein said first object comprises a file or a directory and wherein said second object comprises a file or a directory.

17. The method of claim 15 or claim 16 wherein said encrypting said first filesystem memory block using said first cryptographic key comprises using the Advanced Encryption Standard or wherein said encrypting said second filesystem memory block using said fourth cryptographic key comprises using the Advanced Encryption Standard.

18. A computing apparatus comprising:
a memory (100) including:
a first filesystem memory block (116);
a second filesystem memory block (116);
a processor (120) adapted to carry out the method of any of claims 15 to 17.

19. A computer readable medium containing computer-executable instructions that, when performed by processor (120) in a computing apparatus having a memory (100) including a first filesystem memory block (116) and a second filesystem memory block (116), cause said processor to carry out the method of any of claims 15 to 17.
